# EUROPEAN PATENT APPLICATION

(11) **EP 2 415 646 A1**
(43) Date of publication of application: **08.02.2012**
(21) Application number: 09842662.0
(22) Date of filing: 02.04.2009
(51) Int. Cl.: B60T 8/1755, B60T 8/26, B62L 3/08

(54) **BRAKE CONTROL DEVICE**

(71) Applicant: Bosch Corporation, Tokyo 150-8360 (JP)
(72) Inventor: OGAWA, Takahiro, Yokohama-shi Kanagawa 224-8501 (JP); KANNO, Manabu, Yokohama-shi Kanagawa 224-8501 (JP)
(74) Representative: Dreiss
(86) International application number: PCT/JP2009/056868
(87) International publication number: WO 2010/113308

(57) **Abstract**

It is an object of the invention to provide a brake control device that can accurately detect a rear wheel lift off state and that is not easily affected by a road surface state, a wear condition of a tire, a slipping state of a front wheel and an operation of a driver etc.

In a brake control device that controls a front wheel anti-lock brake system of a front wheel brake of a two-wheel vehicle, it is determined whether the front wheel brake is being braked at equal to or more than a predetermined braking force. If it is determined that braking is being performed at equal to or more than the predetermined braking force, it is determined whether a rear wheel is lifting off in accordance with a slipping state of the rear wheel, and if it is determined that the rear wheel is lifting off, the front wheel anti-lock brake system is activated.

## Description

### TECHNICAL FIELD

The present invention relates to a brake control device for a two-wheel vehicle.

### BACKGROUND ART

It is known that when a vehicle is braking, and particularly when a rapid deceleration braking operation is performed, load of a vehicle body is transferred on to a front wheel side, which leads to the occurrence on some occasions of a state in which a rear wheel lifts off (also described as load loss of the rear wheel, jack knifing and rear lift up etc.). Brake control devices are known that utilize an ABS (anti-lock brake system) in order to inhibit the occurrence of this state in which the rear wheel lifts off.

In this type of brake control device, an estimated value of a vehicle body speed is calculated, for example, as a pseudo vehicle body speed, which is selected from the highest vehicle wheel speed among a detected front wheel speed and a detected rear wheel speed. It is determined that a state of rear wheel lift off has occurred if the extent of reduction of a pseudo vehicle body deceleration computed based on the pseudo vehicle body speed is equal to or more than a predetermined level (for example, refer to Patent Document 1).

However, the rear wheel, which is a drive wheel, is affected in various ways by operations performed by a driver such as rear braking, clutch use and gear positioning. As a result, if a pseudo vehicle body deceleration is calculated based on the rear wheel speed that results from the influence of this type of operation performed by the driver, there is variation in a determination result for whether or not the state of rear wheel lift off is occurring. Thus, it is difficult to obtain a determination result that has sufficient accuracy. In order to avoid this type of difficulty, a control method has been proposed for controlling the rear wheel lift off state by calculating the pseudo vehicle body deceleration that is the deceleration of the pseudo vehicle body speed based just on the front wheel speed (for example, refer to Patent Document 2).
Patent Document 1: Japanese Patent Application Publication No. JP-A-2002-29403
Patent Document 2: Japanese Patent Application Publication No. JP-A-2007-269290

### DISCLOSURE OF THE INVENTION

### PROBLEMS TO BE SOLVED BY THE INVENTION

However, in the above mentioned known structure, in whatever case, the rear wheel lift off state is detected in accordance with only the pseudo vehicle body deceleration calculated based on the generated pseudo vehicle body speed, with the pseudo vehicle body speed being generated from the vehicle wheel speed. As a result, error in the detection of the rear wheel lift off state may occur due to a road surface state, a tire wear state etc.

Moreover, in the above mentioned structure in which the pseudo vehicle body deceleration is calculated based only on the front wheel speed in order to reduce the impact of operations of the driver, for example, when the front wheel itself is in a slipping state, the vehicle body deceleration is calculated to be higher than it actually is, and thus the rear wheel lift off state cannot be determined correctly. Moreover, for example, as a result of the impact of the road surface state, for example, an upward slope or downward slope, it is difficult to specify the deceleration at which the rear wheel actually lifts off.

It is an object of the invention to solve the above described problems of the known art, and to provide a brake control device that can accurately detect a rear wheel lift off state and that is not easily affected by a road surface state, a wear condition of a tire, a slipping state of a front wheel and an operation of a driver etc.

### MEANS FOR SOLVING THE PROBLEMS

The invention is **characterized in that** in a brake control device that controls a front wheel anti-lock brake system of a front wheel brake of a two-wheel vehicle, it is determined whether the front wheel brake is being braked at equal to or more than a predetermined braking force, and if it is determined that braking is being performed at equal to or more than the predetermined braking force, it is determined whether a rear wheel is lifting off in accordance with a slipping state of the rear wheel. If it is determined that the rear wheel is lifting off, the front wheel anti-lock brake system is activated.

In the above aspect, the slipping state may be determined based on wheel speed signals of the front and rear wheels.

In the above aspect, the slipping state may be a state in which a rear wheel anti-lock brake system is activated.

In the above aspect, the slipping state may be determined based on a hydraulic pressure of a hydraulic circuit of a rear wheel brake and/or a hydraulic pressure change amount.

In the above aspect, the determination concerning whether braking is being performed at equal to or more than the predetermined braking force may be made in accordance with a wheel speed that is higher among a front wheel speed and a rear wheel speed, the wheel speed being taken to be a vehicle body speed.

In the above aspect, the determination concerning whether braking is being performed at equal to or more than the predetermined braking force may be made in accordance with a hydraulic pressure of a hydraulic circuit of the front wheel brake.

In the above aspect, the determination concerning whether braking is being performed at equal to or more than the predetermined braking force may be made in accordance with the wheel speed that is higher among the front wheel speed and the rear wheel speed, and in accordance with the hydraulic pressure of the hydraulic circuit of the front wheel brake.

In the above aspect, activation of the front wheel anti-lock brake system may be performed when a determination result that the rear wheel is lifting off is obtained repeatedly over a predetermined time.

In the above aspect, the front wheel anti-lock brake system may be activated to reduce the hydraulic pressure of the hydraulic circuit of the front wheel brake.

In the above aspect, the front wheel anti-lock brake system may be activated to maintain the hydraulic pressure of the hydraulic circuit of the front wheel brake.

In the above aspect, the front wheel anti-lock brake system may be activated to gently increase the hydraulic pressure of the hydraulic circuit of the front wheel brake.

### ADVANTAGES OF THE INVENTION

The invention can accurately detect a rear wheel lift off state and is not easily affected by a road surface state, a wear condition of a tire, a slipping state of a front wheel and an operation of a driver etc.

### BRIEF DESCRIPTION OF THE DRAWINGS

FIG. 1 is a circuit diagram showing a front wheel hydraulic circuit according to a first embodiment of the invention.
FIG. 2 is a block diagram showing a functional configuration of an ECU.
FIG. 3 is a graph showing the outline of rear wheel lift off and a rear wheel lift off protection control of the ECU when braking of a front wheel brake and a rear wheel brake is performed.
FIG. 4 is a flow chart showing an operation when the rear wheel lift off protection control is performed by the ECU.
FIG. 5 is a flow chart showing an operation when a rear wheel lift off protection control is performed by the ECU in a second embodiment of the invention.

### EXPLANATION OF THE REFERENCE NUMERALS AND SIGNS

- 100: Front wheel ABS (anti-lock brake system)
- 101: Brake lever
- 103: Master cylinder
- 104: Line
- 105: Front wheel
- 106: Rear wheel
- 107: Front wheel brake
- 108: Rear wheel brake
- 113: Inlet valve
- 114: Line
- 115: Wheel cylinder
- 118: DC motor
- 119: Hydraulic pump
- 123: Pressure reducing valve
- 124: Line
- 125: Reservoir
- 127: Front wheel pressure sensor
- 129: Front wheel speed sensor
- 130: Rear wheel speed sensor
- 200: Rear wheel ABS (anti-lock brake system)
- 400: ECU (Brake control device)

### BEST MODE FOR CARRYING OUT THE INVENTION

Hereinafter embodiments of the invention will be described with reference to the appended drawings.

### [1] First embodiment

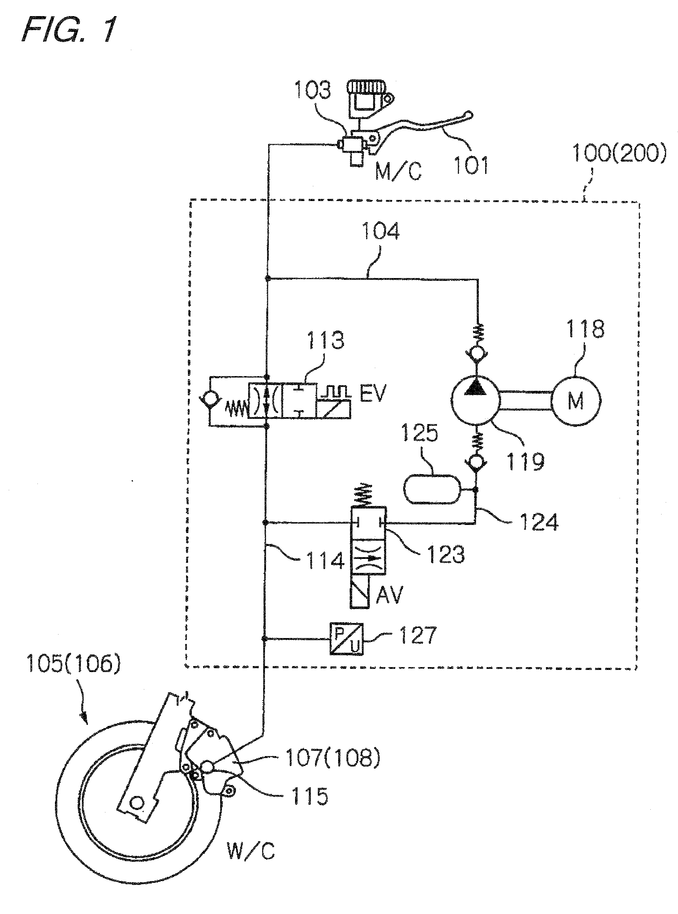

FIG. 1 is a circuit diagram showing a front wheel hydraulic circuit according to a present embodiment. The front wheel hydraulic circuit is filled with brake fluid, and is structured by a brake lever 101 that is operated by a rider, a master cylinder (M/C) 103 that is connected to the brake lever 101, a line 104 that is connected to the master cylinder 103, an inlet valve (EV) 113 which is a normally open electromagnetic valve and which is connected to the line 104, a line 114 that is connected to the inlet valve 113, and a wheel cylinder (W/C) 115 which is connected to the line 114 and brakes a front wheel brake 107 of a front wheel 105. In addition, a pressure sensor (P/U) 127 for detecting a hydraulic pressure of the brake fluid is attached to the line 114, and a pressure reducing valve (AV) 123, which is a normally closed electromagnetic valve, is connected to the line 114. Moreover, a line 124 is connected to the pressure reducing valve 123, and a reservoir 125 is connected to the line 124. Furthermore, an inlet port of a hydraulic pump 119 is connected to the line 124 via a check valve, and an outlet port of the hydraulic pump 119 is connected to the line 104 via a check valve. The hydraulic pump 119 is driven by a DC motor 118. Note that, in FIG. 1, a front wheel anti-lock brake system (ABS) for inhibiting vehicle wheel lock is illustrated by the reference number 100.

Note that, only the front wheel ABS 100 attached to the front wheel 105 is shown in FIG. 1. However, a rear wheel ABS 200 with the same structure is provided and attached to the rear wheel 106, which also differs from the front wheel 105 in that a brake pedal is provided instead of the brake lever 101, and a frame shape around the vehicle wheel and brake capacity etc are different.

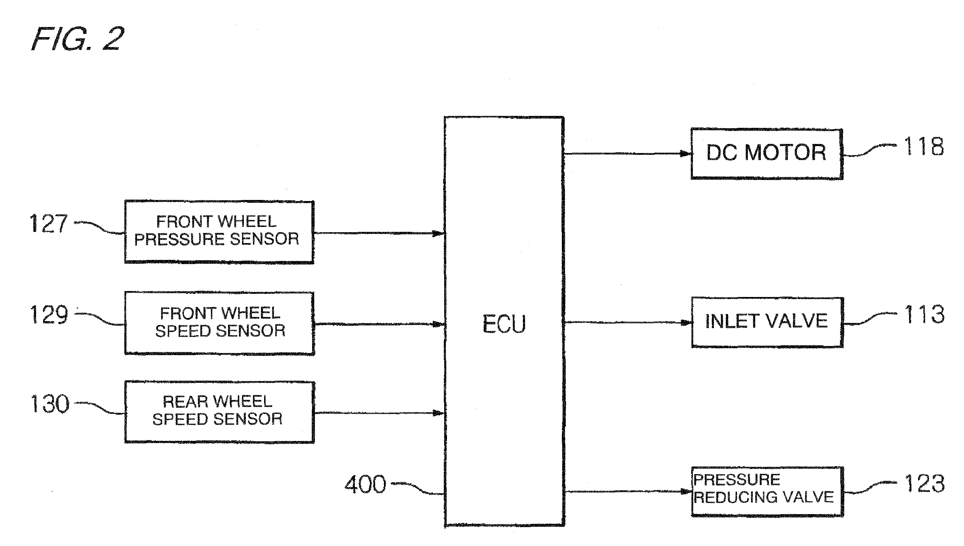

FIG. 2 is a block diagram showing a functional configuration of an ECU 400. The ECU 400 respectively obtains: a front wheel brake pressure signal from the front wheel pressure sensor 127 that detects the hydraulic pressure of the line 114 (refer to FIG. 1) of the front wheel 105
(refer to FIG. 1); a front wheel speed signal from a front wheel speed sensor 129 that detects a wheel speed of the front wheel 105; and a rear wheel speed signal from a rear wheel speed sensor 130 that detects a wheel speed of the rear wheel 106 (refer to FIG. 1). Furthermore, the ECU 400 activates the hydraulic pump 119 via the DC motor 118 and also controls opening and closing of the normally open inlet valve 113 and the normally closed pressure reducing valve 123. In other words, the ECU 400 activates the entire system of the ABSs 100, 200 (refer to FIG. 1). Note that, FIG. 2 only shows the DC motor 118, the inlet valve 113, and the pressure reducing valve 123 of the front wheel 105.

Next, an operation when the front wheel ABS 100 is activated will be explained with reference to FIG. 1. Note that, the open-closed state of each of the valves 113, 123 shown in FIG. 1 illustrates the state when the brake lever 101 is not being operated.

When the front wheel 105 is braked due to operation of the brake lever 101, the front wheel ABS 100 is activated if a predetermined slip, namely, lock tendency, of the front wheel 105 is detected by the ECU 400 (refer to FIG. 2) based on the speed signal of the front wheel speed sensor 129 (refer to FIG. 2).

In this case, the ECU 400 shuts the inlet valve 113, opens the pressure reducing valve 123. As a result, hydraulic pressure of the wheel cylinder 115 is released to the reservoir 125, causing the hydraulic pressure of the wheel cylinder 115 to fall and lock of the front wheel 105 to be avoided. Then, the ECU 400 repeatedly performs a pressure reduction operation and a pressure increase operation of the wheel cylinder 115. Note that, hereinafter, the pressure increase operation refers to an operation in which pressure is increased in a stepped manner by increasing and maintaining the pressure of the wheel cylinder 115. Within this pressure increase operation, the ECU 400 repeatedly increases and maintains the pressure of the wheel cylinder 115. When the pressure is increased, the ECU 400 opens the inlet valve 113 and closes the pressure reducing valve 123. As a result, the ECU 400 pumps brake fluid out from the reservoir 125 using the hydraulic pump 119, and feeds the brake fluid to the wheel cylinder 115 via the line 104, the open inlet valve 113 and the line 114. When the pressure is maintained, the ECU 400 shuts both the inlet valve 113 and the pressure reducing valve 123, and maintains the hydraulic pressure of the wheel cylinder 115 at a constant level. In the above described manner, the ECU 400 repeatedly performs the pressure reduction operation and the pressure increase operation by opening and closing the inlet valve 113 using pulse width modulation (PWM) control, ON-OFF control etc. when the front wheel ABS 100 is activated.

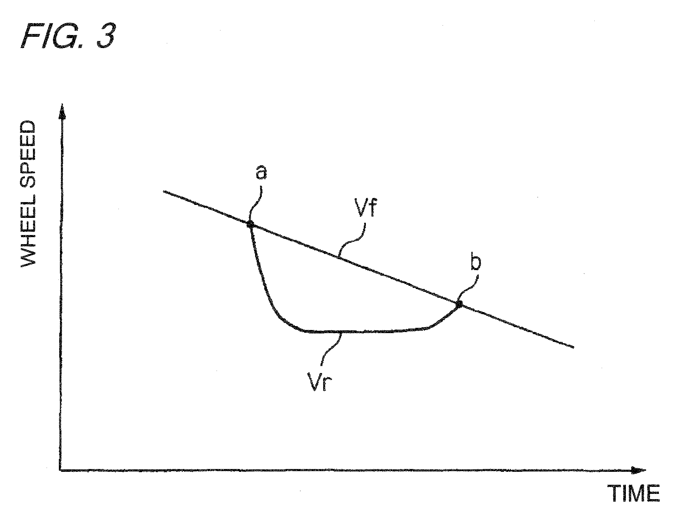

FIG. 3 is a graph showing the outline of rear wheel lift off and a rear wheel lift off protection control of the ECU 400 when braking of the front wheel brake 107 and the rear wheel brake 108 is performed. In the graph, the vertical axis shows the vehicle wheel speed, and the horizontal axis shows time. When in a normal running state or a state in which the brakes are being braked normally with the front wheel 105 and the rear wheel 106 in contact with the road surface, a front wheel speed Vf and a rear wheel speed Vr are substantially the same vehicle wheel speed. In this state, if the front wheel brake 107 and the rear wheel brake 108 are braked, the front wheel speed Vf and the rear wheel speed Vr reduce at the same deceleration rate along with the passing of time. At this point, if load of a vehicle body and the rider is disproportionately placed on the front wheel, and at point a, lift off of the rear wheel 106 begins. The ECU 400 detects the lift off of the rear wheel 106, and controls the front wheel ABS 100 to start rear wheel lift off protection control in order to inhibit rear wheel lift off. At this time, the wheel speed of the front wheel 105, which is in contact with the road surface, reduces at a deceleration rate that is at a virtually unchanged. However, following a sudden reduction in the wheel speed of the rear wheel 106 that is lifting off, it rotates at a constant wheel speed that is lower than that of the front wheel 105 due to inertia. When the lift off of the rear wheel 106 is being controlled, a rotational speed of the rear wheel 106, which has been rotating at a constant wheel speed, increases as a contact pressure with the road surface increases. At point b, the rear wheel 106 becomes fully in contact with the road surface and the wheel speed becomes substantially the same as the front wheel speed Vf.

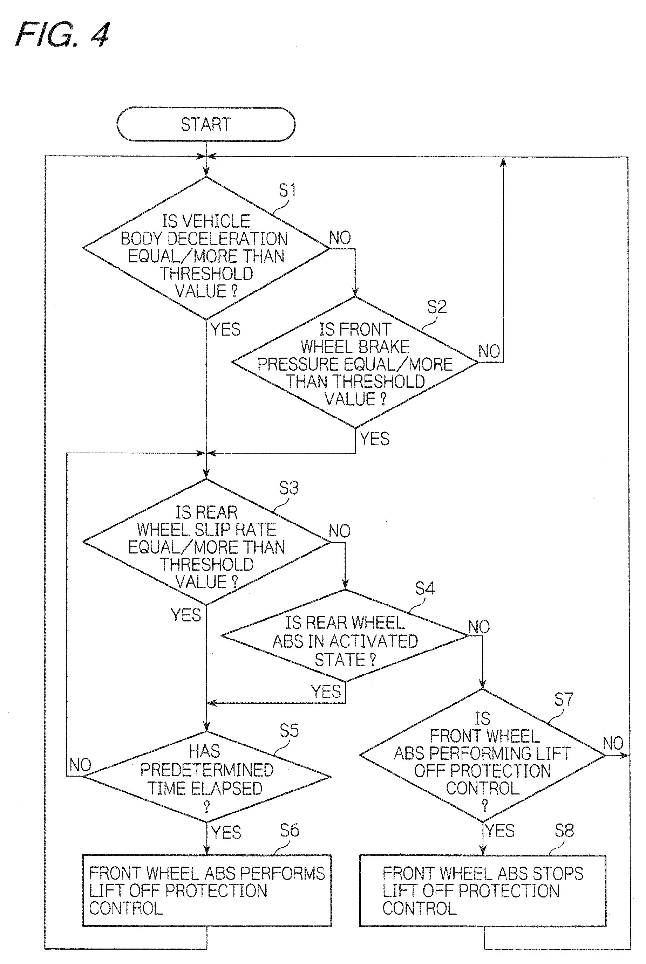

Next, the rear wheel lift off protection control of the ECU 400 of the present embodiment will be explained with reference to FIG. 4. FIG. 4 is a flow chart showing an operation when the rear wheel lift off protection control is performed by the ECU 400 when the vehicle is in a running state.

When the rear wheel lift off protection control is performed, first, the ECU 400 determines whether or not a vehicle body deceleration is equal to or more than a predetermined threshold value (step S1). Here, the vehicle body deceleration is computed by taking, as a vehicle body speed, the wheel speed that is higher among a front wheel speed and a rear wheel speed based on wheel speed signals obtained from the front wheel speed sensor 129 and the rear wheel speed sensor 130.

At step S1, if it is determined that the vehicle body deceleration is equal to or higher than the predetermined threshold value (YES at step S1), the ECU 400 determines whether or not a slip rate ((the vehicle body speed - the vehicle wheel speed) ÷ vehicle body speed) of the rear wheel 106 is equal to or more than a predetermined threshold value (step S3).

On the other hand, at step S1, if it is determined that the vehicle body deceleration is not equal to or more than the predetermined threshold value (NO at step S1), the ECU 400 obtains the front wheel brake pressure signal from the front wheel pressure sensor 127, and determines whether or not a front wheel brake pressure based on the obtained front wheel brake pressure signal is equal to or more than a predetermined threshold value (step S2).

Here, data for the front wheel brake pressure generated based on the front wheel brake pressure signal obtained from the front wheel pressure sensor 127 is directly obtained raw source data, and the determination of step S2 based on the front wheel brake pressure uses a threshold value that is set lower than that used for the determination based on the vehicle body deceleration of step S1. As a result, the determination at step S2 allows advance to the processing of step S3 more easily than the determination of step S1, and as a result it takes priority over the determination of step S1.

At step S2, if it is determined that the front wheel brake pressure is not equal to or more than the predetermined threshold value (NO at step S2), the ECU 400 repeats the series of processes from step S1.

On the other hand, if it is determined at step S2 that the front wheel brake pressure is equal to or more than the predetermined threshold value (YES at step S2), the ECU 400 advances to the processing at step S3.

At step S3, if it is determined that the slip rate of the rear wheel 106 is equal to or more than the predetermined threshold value (YES at step S3), the ECU 400 determines whether or not a predetermined time has elapsed after advancing to the processing of step S3 from the processing of step S1 or step S2, or, in other words, whether or not step 5 was repeatedly advanced to following passing of a predetermined time (step S5).

On the other hand, if it is determined at step S3 that the slip rate of the rear wheel 106 is not equal to or more than the predetermined threshold value (NO at step S3), the ECU 400 determines whether or not the rear wheel ABS 200 is in an activated state (step S4).

Here, the determination of step S4 based on the activated state of the rear wheel ABS 200 uses a threshold value that is set lower than that of the determination based on the slip rate of the rear wheel 106 of step S3. Thus, the determination at step S4 allows advance to the processing of step S5 more easily than the determination of step S3.

At step S4, if it is determined that the rear wheel ABS 200 is not in an activated state (NO at step S4), the ECU 400 determines whether or not the front wheel ABS 100 is presently performing lift off protection control (step S7).

At step S5, if it is determined that the predetermined time has not elapsed (NO at step S5), the ECU 400 repeats the series of process from step S3.

On the other hand, if it is determined that the predetermined time has elapsed at step S5 (YES at step S5), the ECU 400 controls the front wheel ABS 100 to perform the lift off protection control by activating the front wheel ABS 100 to reduce the brake pressure of the front wheel brake 107 (step S6).

At step S6, once the front wheel ABS 100 is being controlled to perform the lift off protection control, the ECU 400 repeatedly performs the series of processes from step S1 while maintaining a state in which the front wheel ABS 100 is controlled to perform the lift off protection control.

On the other hand, if it is determined at step S4 that the rear wheel ABS 200 is not in an activated state (NO at step S4), the ECU 400 determines whether or not the front wheel ABS 100 is presently performing the lift off protection control (step S7).

At step 7, if it is determined that the front wheel ABS 100 is not presently performing the lift off protection control (No at step S7), the ECU 400 repeats the series of processes from step S1.

On the other hand, at step S7, if it is determined that the front wheel ABS 100 is presently performing the lift off protection control (YES at step S7), the ECU 400 controls the front wheel ABS 100 to stop the lift off protection control (step S8) and repeats the series of processes from step S1.

As a result of the above processing, the ECU 400 determines, by using the vehicle body deceleration or the front wheel brake pressure, whether or not the front wheel brake 107 is being braked at equal to or more than a predetermined braking force, or in other words, it determines whether or not the vehicle is being braked suddenly (steps S1, S2).

Furthermore, the ECU 400 determines, by using the slip rate of the rear wheel 106 or the slipping state of the rear wheel 106 that can be obtained as the activated state of the rear wheel ABS 200, whether or not the rear wheel 106 is lifting off (steps S3, S4), and activates the front wheel ABS 100 based on the determination result. Note that, the slipping state as used in the present embodiment includes not only a state in which the rear wheel 106 is actually slipping, but also a state in which slip is being detected, namely, a state in which the rear wheel 106 would have slipped if the rear wheel ABS 200 had not been activated.

Next, a case will be explained in which the ECU 400 according to the present embodiment is applied to various types of two-wheel vehicle, and it is determined whether or not the front wheel brake 107 is being braked at equal to or more than a predetermined braking force and whether or not the rear wheel 106 is lifting off.

An explanation will now be given concerning a case in which the two-wheel vehicle is provided with the ABSs 100, 200 on the front and rear wheels 105, 106, and the pressure sensor 127 on the front wheel 105. The determination concerning whether or not the front wheel brake 107 is being braked at equal to or more than the predetermined braking force is made by performing step S1 and step S2. At this time, step S2 is prioritized because its threshold value is set to make it easier to advance to step S3 than the threshold value of step S1. On the other hand, the determination concerning whether or not the rear wheel 106 is lifting off is made by performing step S3 and step S4. At this time, step S4 is prioritized because its threshold value is set to make it easier to advance to step S3 than the threshold value of step S3.

An explanation will now be given concerning a case in which the two-wheel vehicle is provided with the ABSs 100, 200 on the front and rear wheels 105, 106, but is not provided with the front wheel pressure sensor 127. In this case, because the front wheel pressure signal is not obtained from the front wheel pressure sensor 127, the determination of step S2 is always that the front wheel brake pressure is not equal to or more than the threshold value (NO at step S2). As a result, the determination concerning whether or not the front wheel brake 107 is being braked at equal to or more than the predetermined braking force is made by only performing step S1. On the other hand, the determination concerning whether or not the rear wheel 106 is lifting off is made by performing step S3 and step S4. At this time, step S4 is prioritized because its threshold value is set to make it easier to advance to step S3 than the threshold value of step S3.

An explanation will now be given concerning a case in which the two-wheel vehicle is provided with only the ABS 100 on the front wheel 105, and the front wheel pressure sensor 127. The determination concerning whether or not the front wheel brake 107 is being braked at equal to or more than the predetermined braking force is made by performing step S1 and step S2. At this time, step S2 is prioritized because its threshold value is set to make it easier to advance to step S3 than the threshold value of step S1. On the other hand, because the rear wheel ABS 200 is not provided, the determination of step S4 is always that the rear wheel ABS 200 is not in an activated state (NO at step S4). As a result, the determination concerning whether or not the rear wheel 106 is lifting off is made by only performing step S3.

An explanation will now be given concerning a case in which the two-wheel vehicle is provided with only the ABS 100 on the front wheel 105, and is not provided with the front wheel pressure sensor 127. In this case, because the front wheel pressure sensor 127 is not provided, the determination concerning whether or not the front wheel brake 107 is being braked at equal to or more than the predetermined braking force is made by performing only step S1. On the other hand, because the rear wheel ABS 200 is not provided, the determination concerning whether or not the rear wheel 106 is lifting off is made by only performing step S3.

In the present embodiment, the ECU 400 determines whether or not the front wheel brake 107 is being braked at equal to or more than the predetermined braking force in accordance with the vehicle body deceleration or the front wheel brake pressure (steps S1, S2). In the case that it is determined that braking is being performed at equal to or more than the predetermined braking force, it is determined whether or not the rear wheel 106 is lifting off in accordance with the slip rate of the rear wheel 106 or the slipping state obtained as the activated state of the rear wheel ABS 200 (steps S3, S4). If it is determined that the rear wheel 106 is lifting off, the front wheel anti-lock brake system is activated. Accordingly, when it is determined that the rear wheel lift off state is occurring, because it is difficult for the ECU 400 to be affected by the road condition, the tire wear state, the slipping state of the front wheel 105, the operations of the driver etc., the rear wheel lift off state can be detected more accurately. In addition, the rear wheel lift off state can be controlled more appropriately.

Moreover, in the present embodiment, the ECU 400 makes the determination concerning whether the rear wheel 106 is lifting off at step S3 in accordance with the slip rate based on the rear wheel speed. As a result, even in the case that the rear wheel ABS 200 is not provided or in the case that its operation has been deactivated in advance, the ECU 400 can make the determination concerning whether the rear wheel 106 is lifting off, and thus can obtain a more reliable determination result.

In addition, in the present embodiment, the ECU 400 makes the determination concerning whether the rear wheel 106 is lifting off at step S4 in accordance with the activated state of the rear wheel ABS 200. As a result, compared to a case in which the vehicle wheel speed is used, it is difficult for the ECU 400 to be affected by the road condition etc., and thus the determination concerning lift off of the rear wheel 106 can be made more reliably.

In addition, in the present embodiment, the ECU 400 makes the determination whether or not the front wheel brake 107 is being braked at equal to or more than the predetermined braking force in accordance with the front wheel brake pressure or the vehicle body deceleration, and then determines whether or not the rear wheel 106 is lifting off in accordance with the activated state of the rear wheel ABS 200 or the slip rate of the rear wheel 106. As a result, it is sufficient if the ECU 400 obtains at least one of the front wheel brake pressure and the vehicle body deceleration and at least one of the activated state of the rear wheel ABS 200 and the slip rate of the rear wheel 106. Thus, it is possible to more accurately detect the rear wheel lift off state regardless of differences in the installed equipment of the vehicle such as, for example, whether or not the rear wheel ABS 200 or pressure sensors are provided, and thus general purpose versatility is achieved.

### [2] Second embodiment

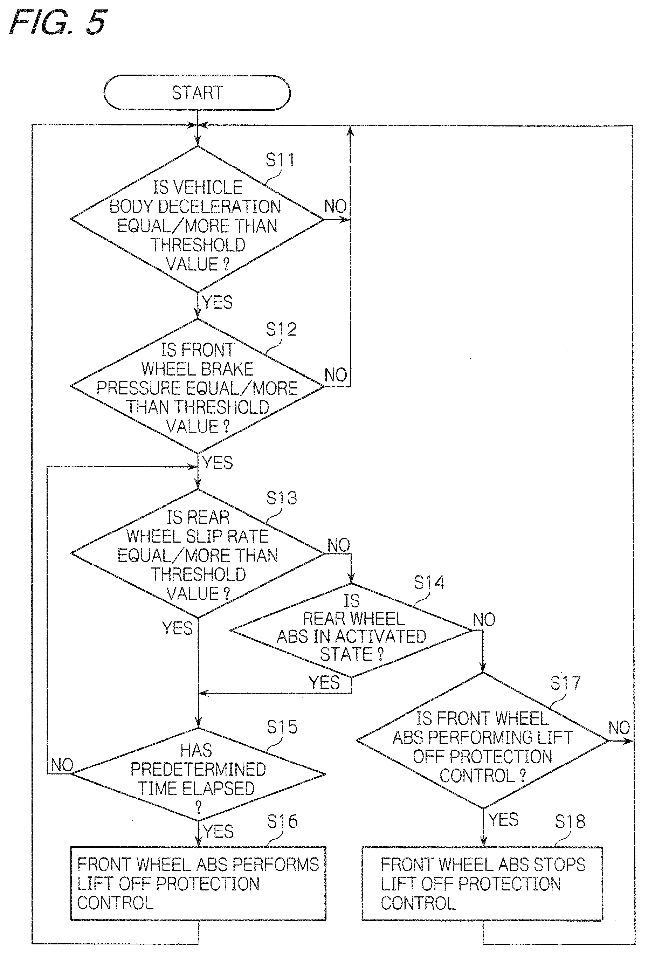

Next, a rear wheel lift off protection control process of the ECU 400 of a second embodiment will be explained with reference to FIG. 5. FIG. 5 is a flow chart showing an operation when the rear wheel lift off protection control is performed by the ECU 400 when the vehicle is running. The flow chart of the present embodiment differs from the flow chart of the first embodiment shown in FIG. 4 with respect to the processes from step S11 to step S13. As shown in FIG. 5, step S13 to step S18 in the present embodiment are the same as step S3 to step S8 of the first embodiment. In addition, it is assumed that the ECU 400 of the second embodiment is mounted in a two-wheel vehicle that is provided with the front wheel pressure sensor 127 that detects the front wheel brake pressure.

Next, the processes of step S11 to step S13 that are different from the first embodiment will be explained.

When the rear wheel lift off protection control is performed, first, the ECU 400 determines whether or not the vehicle body deceleration is equal to or more than the predetermined threshold value (step S11). Here, the vehicle body deceleration is determined by using the wheel speed that is higher among the front wheel speed and the rear wheel speed obtained from the front wheel speed sensor 129 and the rear wheel speed sensor 130.

At step S11, if it is determined that the vehicle body deceleration is not equal to or more than the predetermined threshold value (NO at step S11], the ECU 400 repeats the processing of step S11 until it is determined that the vehicle body deceleration is equal to or more than the threshold value (YES at step S11).

On the other hand, at step S11, if it is determined that the vehicle body deceleration is equal to or higher than the predetermined threshold value (YES at step S11], the ECU 400 obtains the front wheel brake pressure signal from the front wheel pressure sensor 127, and determines whether or not the front wheel brake pressure based on the obtained front wheel brake pressure signal is equal to or more than the predetermined threshold value (step S12).

Here, data for the front wheel brake pressure generated based on the front wheel brake pressure signal obtained from the front wheel pressure sensor 127 is directly obtained raw source data, and the determination of step S12 based on the front wheel brake pressure uses a threshold value that is set lower than that used for the determination based on the vehicle body deceleration of step S11. As a result of step S12, even if the case that there has been an error in detection of the wheel speed signal because of an abnormality occurring due to, for example, the wheel speed sensors 129, 130 being subjected to an impact, the ECU 400 can re-confirm whether or not the front wheel brake 107 is being braked at equal to or more than the predetermined braking force using the front wheel brake pressure signal.

At step S12, if it is determined that the front wheel brake pressure is not equal to or more than the predetermined threshold value (NO at step S12), the ECU 400 repeats the series of processes from step S11.

On the other hand, if it is determined at step S12 that the front wheel brake pressure is equal to or more than the predetermined threshold value (YES at step S12), the ECU 400 advances to the process at step S13.

As a result of the above processing, the ECU 400 determines, by using both the vehicle body deceleration or the front wheel brake pressure, whether or not the front wheel brake 107 is being braked at equal to or more than the predetermined braking force, or in other words, it determines whether or not the vehicle is being braked suddenly (steps S11, S12).

In the present embodiment, the ECU 400 determines that the front wheel brake 107 is being braked at equal to or more than the predetermined braking force in the case that both conditions are satisfied, namely, that the vehicle body deceleration is equal to or more than the predetermined threshold value and that the front wheel brake pressure is equal to or more than the predetermined threshold value. When the front wheel ABS 100 is in an activated state, there is a tendency for the vehicle body deceleration to be estimated to be higher than the actual deceleration. However, according to the present embodiment, the ECU 400 can inhibit a determination from mistakenly being made concerning whether or not the slip rate of the rear wheel 106 is equal to or more than the threshold value even though the rear wheel 106 is not lifting off or the vehicle deceleration is not at a level at which the rear wheel 106 would lift off. As a result, unnecessary processing is avoided and the ECU 400 can perform the series of processes efficiently.

Hereinabove, the invention has been explained using embodiments but the invention is not limited to these embodiments. For example, in the embodiments, the ECU 400 determines the lift off of the rear wheel 106 in accordance with the activated state of the rear wheel ABS 200 and the rear wheel slip rate, but the invention is not limited to this. It is possible to determine rear wheel lift off in other ways. For example, a rear wheel pressure sensor may be provided that detects the rear wheel brake pressure. The ECU may determine that rear wheel lift off has occurred when the rear wheel ABS is activated and the rear wheel brake pressure has reached a predetermined reduced pressure state and/or based on a hydraulic pressure change amount of the rear wheel brake pressure at that time. Thus, the determination of the operation of the rear wheel ABS can be performed reliably.

In addition, in the above described embodiments, at step S6 and step S16, in order to control the lift off of the rear wheel 106, the ECU 400 activates the front wheel ABS 100 so as to reduce the front wheel brake pressure. However, the invention is not limited to this. As long as lift off of the rear wheel can be controlled, for example, the ECU may activate the front wheel ABS 100 to maintain the front wheel brake pressure to inhibit the rear wheel from lifting off any more or may gently increase the front wheel brake pressure to moderate the rear wheel lift off. As a result, when the rear wheel lifts off, it is possible to reduce the extent to which the rider feels that brake operability is strange due to automatic reduction of the front wheel brake pressure by the ECU. Furthermore, at this time, it is possible to increase the range in which the rider can maneuver the vehicle body himself because the front wheel brake pressure is maintained so that the rear wheel does not lift off any more or the front wheel brake pressure is gently increased to moderate the rear wheel lift off.

In addition, in the above described embodiments, the threshold values for the determination concerning whether the front wheel brake 107 is being braked at equal to or more than the predetermined braking force by the ECU 400 are set so that it is easier to advance to step S3 from step S2 than step S1. However, the invention is not limited to this. For example, the threshold values of step S1 and step S2 may be set so that it just as easy to advance to step S3, and the ECU may advance to step S3 when at least one of step S1 and step S2 is satisfied. As a result, regardless of various circumstances such as the road surface condition etc., it is possible to reliably perform the determination concerning whether or not the front wheel brake is being braked at equal to or more than the predetermined braking force.

Furthermore, in the above described embodiments, after the determination based on the vehicle body deceleration of steps S1, S11, the determination based on the front wheel brake pressure signal of steps S2, S12 is performed. However, the invention is not limited to this. For example, by making the determination based on the vehicle body deceleration after the determination based on the front wheel brake pressure signal has been completed, it is possible to perform the determination based on the vehicle body deceleration as provisional determination means in the case that there was an abnormality when making the determination based on the front wheel brake pressure signal. In addition, because the time until making the determination that the vehicle is not braking suddenly is shortened due to determining first whether or not the vehicle is braking suddenly based on the front wheel brake pressure signal that is raw source data, the ECU can perform the series of processes efficiently and thus as a whole the processing time is shortened.

## Claims

1. A brake control device that controls a front wheel anti-lock brake system of a front wheel brake of a two-wheel vehicle, the brake control device being **characterized by**:
determining whether the front wheel brake is being braked at equal to or more than a predetermined braking force;
determining, if it is determined that braking is being performed at equal to or more than the predetermined braking force, whether a rear wheel is lifting off in accordance with a slipping state of the rear wheel; and
activating the front wheel anti-lock brake system if it is determined that the rear wheel is lifting off.

2. The brake control device according to claim 1, **characterized in that**
the slipping state is determined based on wheel speed signals of the front and rear wheels.

3. The brake control device according to claim 1, **characterized in that**
the slipping state is a state in which a rear wheel anti-lock brake system is activated.

4. The brake control device according to claim 1, **characterized in that**
the slipping state is determined based on a hydraulic pressure of a hydraulic circuit of a rear wheel brake and/or a hydraulic pressure change amount.

5. The brake control device according to any one of claims 1 to 4, **characterized in that**
the determination concerning whether braking is being performed at equal to or more than the predetermined braking force is made in accordance with a wheel speed that is higher among a front wheel speed and a rear wheel speed.

6. The brake control device according to any one of claims 1 to 4, **characterized in that**
the determination concerning whether braking is being performed at equal to or more than the predetermined braking force is made in accordance with a hydraulic pressure of a hydraulic circuit of the front wheel brake.

7. The brake control device according to any one of claims 1 to 4, **characterized in that**
the determination concerning whether braking is being performed at equal to or more than the predetermined braking force is made in accordance with a wheel speed that is higher among a front wheel speed and a rear wheel speed, and thereafter, the determination is made in accordance with a hydraulic pressure of a hydraulic circuit of the front wheel brake.

8. The brake control device according to any one of claims 1 to 4, **characterized in that**
the determination concerning whether braking is being performed at equal to or more than the predetermined braking force is made in accordance with a hydraulic pressure of a hydraulic circuit of the front wheel brake, and thereafter, the determination is made in accordance with a wheel speed that is higher among a front wheel speed and a rear wheel speed.

9. The brake control device according to any one of claims 1 to 8, **characterized in that**
activation of the front wheel anti-lock brake system is performed when a determination result that the rear wheel is lifting off is obtained repeatedly over a predetermined time.

10. The brake control device according to any one of claims 1 to 9, **characterized in that**
the front wheel anti-lock brake system is activated to reduce the hydraulic pressure of the hydraulic circuit of the front wheel brake.

11. The brake control device according to any one of claims 1 to 9, **characterized in that**
the front wheel anti-lock brake system is activated to maintain the hydraulic pressure of the hydraulic circuit of the front wheel brake.

12. The brake control device according to any one of claims 1 to 9, **characterized in that**
the front wheel anti-lock brake system is activated to gently increase the hydraulic pressure of the hydraulic circuit of the front wheel brake.
